# EUROPEAN PATENT APPLICATION

(11) **EP 4 672 466 A1**
(43) Date of publication of application: **31.12.2025**
(21) Application number: 24877585.0
(22) Date of filing: 14.10.2024
(51) Int. Cl.: H01M 50/342, H01M 50/528, H01M 50/538, H01M 50/167, H01M 50/559, H01M 50/213, H01M 50/249

(54) **BATTERY CELL AND BATTERY PACK AND VEHICLE INCLUDING BATTERY CELL**

(30) Priority: 12.10.2023 KR 20230135959
(71) Applicant: LG Energy Solution, Ltd., Seoul 07335 (KR)
(72) Inventor: KIM, Hong-Jae, Daejeon 34122 (KR); PARK, Sang-Jin, Daejeon 34122 (KR); PARK, Jong-Hoon, Daejeon 34122 (KR); WOO, Jae-Young, Daejeon 34122 (KR); LEE, Jun-Su, Daejeon 34122 (KR); CHAE, Sang-Hak, Daejeon 34122 (KR); HAN, Woo-Ri, Daejeon 34122 (KR)
(74) Representative: Goddar, Heinz J.
(86) International application number: PCT/KR2024/015531
(87) International publication number: WO 2025/080050

(57) **Abstract**

A battery cell according to an embodiment of the present disclosure may include: an electrode assembly including a first electrode having a first uncoated portion, a second electrode having a second uncoated portion, and a separator interposed therebetween; a battery housing configured to receive the electrode assembly through an opening provided on one side; and a first current collector provided in the opening and configured to electrically connect the first uncoated portion and the battery housing, and the first current collector may be configured such that at least a part thereof is separated from the battery housing when internal pressure increases to a reference value or more.

## Description

### TECHNICAL FIELD

The present disclosure relates to a battery cell, and a battery pack and a vehicle including the battery cell.

This application is based on and claims priority from Korean Patent Application No. 10-2023-0135959, filed on October 12, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

A battery pack may be configured by connecting multiple battery cells in series/parallel depending on the charge/discharge capacity of the battery pack required for the electric vehicle (EV) or hybrid electric vehicle (HEV). In this case, it is common to preferentially form a battery module including at least one battery cell and then add other components using the at least one battery module, thereby configuring a battery pack or battery rack. Alternatively, a battery pack has recently been manufactured in a cell-to-pack type in which multiple battery cells are directly stored in a pack housing, instead of being modularized.

However, if a fire or explosion occurs in such a battery pack including a large number of lithium secondary battery cells, the damage is bound to be even greater. A fire occurring in a battery pack starts from an abnormal temperature rise and internal gas generation of the battery cells disposed therein due to overcharging or the like. Accordingly, if the internal pressure of the battery cell rises above a certain level, venting occurs so that high-temperature gases and high-temperature sparks including electrode active materials and aluminum particles are ejected to the outside of the battery cell.

Meanwhile, an existing cylindrical battery cell is provided with a beading portion formed inward to be recessed at an end adjacent to the opening of a battery housing to prevent the vertical movement of the electrode assembly inside the battery housing.

In this case, when a thermal event such as thermal runaway occurs inside the cylindrical battery cell, high temperature and pressure are applied to the side of the battery housing including the beading portion. This causes a side rupture phenomenon in which the flame does not move toward the opening but is ejected by destroying the side of the battery housing such as the beading portion. If the side rupture phenomenon occurs, the surrounding flame directly moves to other cylindrical battery cells, which may cause a chain reaction of thermal runaway.

Therefore, there is a need to develop a battery cell capable of minimizing the high temperature and pressure applied to the side of the battery housing, such as the beading portion, when a thermal event occurs, thereby suppressing the side rupture phenomenon.

In particular, it is necessary to develop a battery cell that guides the flame to move toward the opening of the battery housing when a thermal event occurs, thereby suppressing the side rupture phenomenon.

### DISCLOSURE

### Technical Problem

The present disclosure is designed to solve the problems of the related art, and therefore the present disclosure is directed to providing a battery cell capable of ensuring safety and reliability in the event of thermal runaway of the battery cell, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery cell including: an electrode assembly including a first electrode having a first uncoated portion, a second electrode having a second uncoated portion, and a separator interposed therebetween; a battery housing configured to receive the electrode assembly through an opening provided on one side; and a first current collector provided in the opening and configured to electrically connect the first uncoated portion and the battery housing, wherein the first current collector may be configured such that at least a part thereof is separated from the battery housing when internal pressure increases to a reference value or more.

A welding portion may be formed between the first current collector and an inner surface of the battery housing, so that at least a portion of the first current collector may be welded to the inner surface of the battery housing.

The first current collector may include a first uncoated-portion coupling portion disposed at the top of the electrode assembly and coupled to the first uncoated portion, and a plurality of housing coupling portions disposed on the inner surface of the battery housing, and at least one welding portion may be provided between at least one of the plurality of housing coupling portions and the inner surface of the battery housing.

The first current collector may further include a support disposed at the top of the electrode assembly, and the first uncoated-portion coupling portion and the plurality of housing coupling portions may be configured to extend from the support.

Each of the plurality of housing coupling portions may include a contact portion welded onto the inner surface of the battery housing, and a connection portion configured to connect the support and the contact portion.

The contact portions may be provided to be spaced apart from each other along a circumferential direction of the electrode assembly.

The welding portion may be provided in each of the plurality of housing coupling portions.

The welding portion may include a vulnerable portion having weak welding strength.

The welding strength of the vulnerable portion may be approximately 10 kgf/cm² or less.

A plurality of welding portions may be formed between the inner surface of the battery housing and one of the plurality of housing coupling portions.

The number of welding portions formed for each housing coupling portion varies among the plurality of housing coupling portions.

The battery housing may include a beading portion formed at an end adjacent to the opening so as to be recessed inward by pressing, and the welding portion may be provided between the beading portion and the plurality of housing coupling portions.

The beading portion may have a flat section parallel to a lower surface of the battery housing in at least a portion thereof, and the radial width of the welding portion may be configured to be 20% or less of the length of the flat section.

The welding portion may be provided only in some of the plurality of housing coupling portions.

The battery cell according to the present disclosure may further include a housing cover configured to seal the opening and having a venting portion.

The battery cell according to the present disclosure may further include a terminal configured to penetrate the battery housing on the opposite side of the opening so as to be electrically connected to the second uncoated portion.

The battery cell according to the present disclosure may further include a second current collector positioned between the electrode assembly and the terminal, and the second current collector may include a second uncoated-portion coupling portion coupled to the second uncoated portion, and a terminal coupling portion coupled to the terminal.

According to another aspect of the present disclosure, there is provided a battery pack including a plurality of battery cells according to an embodiment of the present disclosure described above.

According to another aspect of the present disclosure, there is provided a vehicle including a battery pack according to an embodiment of the present disclosure described above.

### Advantageous Effects

According to one aspect of the present disclosure, it is possible to suppress the side rupture phenomenon by minimizing the high temperature and pressure applied to the side of the housing when a thermal event occurs in the battery cell, thereby ensuring the safety and reliability of the battery cell.

According to another aspect of the present disclosure, when a thermal event occurs in the battery cell, the current collector can be quickly separated from the housing so that the electrode assembly is ejected from the housing, thereby minimizing the heat and pressure inside the housing.

Furthermore, according to another aspect of the present disclosure, it is possible to quickly discharge gas or flames generated when the battery cell is in an abnormal state to the outside of the housing while guiding the direction thereof, thereby minimizing thermal damage to other battery cells.

As a result, events due to thermal runaway of the battery pack or a device equipped with them, such as fire or explosion, can be prevented or delayed.

In particular, in the case of an electric vehicle, it is possible to secure sufficient time for the occupants to escape or drive by suppressing or delaying the propagation of thermal runaway between the battery cells.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery cell according to an embodiment of the present disclosure.
FIG. 2 is a perspective view of an electrode assembly included in a battery cell according to an embodiment of the present disclosure.
FIG. 3 is a cross-sectional view of a battery cell according to an embodiment of the present disclosure.
FIG. 4 is a cross-sectional view schematically illustrating the state in which a first current collector included in a battery cell is separated from the battery housing when a thermal event occurs according to an embodiment of the present disclosure.
FIG. 5 is a perspective view of a first current collector included in a battery cell according to an embodiment of the present disclosure.
FIG. 6 is a plan view illustrating the internal structure of a battery cell according to an embodiment of the present disclosure.
FIG. 7 is an enlarged view of part A in FIG. 3, which illustrates a welding portion included in a battery cell according to an embodiment of the present disclosure.
FIG. 8 is a cross-sectional view illustrating the state in which a first current collector included in a battery cell is separated from a battery housing when a thermal event occurs according to an embodiment of the present disclosure.
FIG. 9 is a plan view of a battery cell according to another embodiment of the present disclosure.
FIG. 10 is a cross-sectional view illustrating the state in which a part of a first current collector included in a battery cell is coupled to a battery housing according to an embodiment of the present disclosure.
FIG. 11 is a cross-sectional view illustrating the state in which a part of a first current collector included in a battery cell is separated from a battery housing when a thermal event occurs according to an embodiment of the present disclosure.
FIG. 12 is a drawing illustrating a second current collector included in a cylindrical battery cell according to an embodiment of the present disclosure.
FIG. 13 is a drawing illustrating a schematic configuration of a battery pack including cylindrical battery cells according to an embodiment of the present disclosure.
FIG. 14 is a drawing illustrating a schematic configuration of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For convenience of explanation, the longitudinal direction of a winding axis of an electrode assembly wound in the jellyroll shape will be referred to as an "axial direction" in this specification. In addition, the direction surrounding the winding axis will be referred to as a "circumferential direction". Furthermore, the direction approaching or moving away from the winding axis will be referred to as a "radial direction". In particular, the direction approaching the winding axis will be referred to as a "centripetal direction", and the direction moving away from the winding axis will be referred to as a "centrifugal direction".

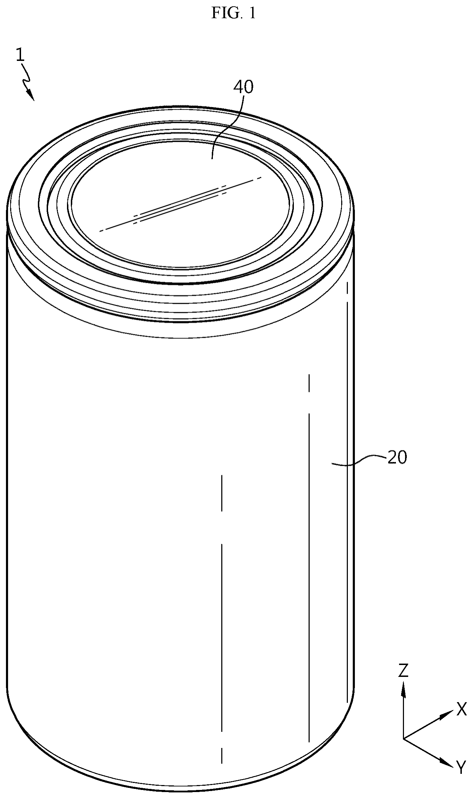

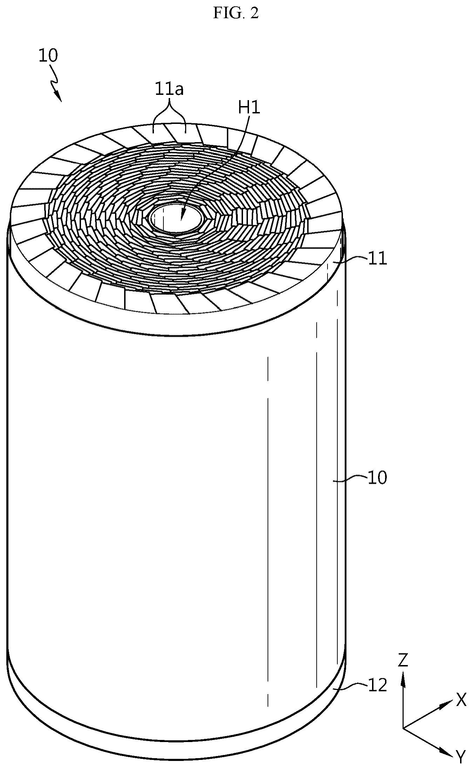

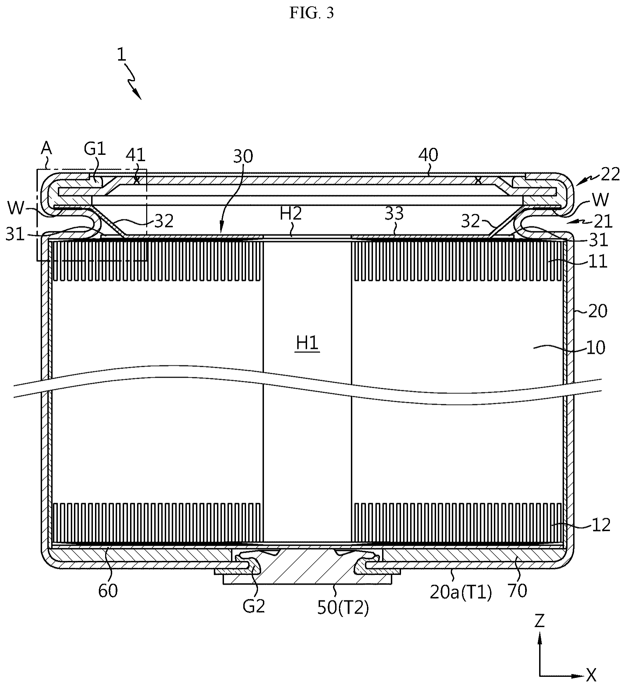

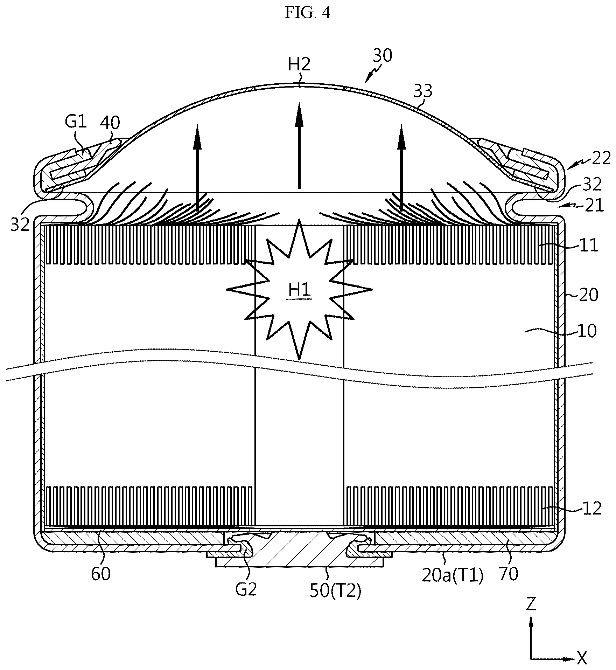

FIG. 1 is a perspective view of a battery cell according to an embodiment of the present disclosure, FIG. 2 is a perspective view of an electrode assembly included in a battery cell according to an embodiment of the present disclosure, and FIG. 3 is a cross-sectional view of a battery cell according to an embodiment of the present disclosure. In addition, FIG. 4 is a cross-sectional view schematically illustrating the state in which a first current collector included in a battery cell is separated from the battery housing when a thermal event occurs according to an embodiment of the present disclosure.

Referring to FIG. 1, the battery cell 1 according to an embodiment of the present disclosure includes an electrode assembly 10, a battery housing 20, and a first current collector 30. The battery cell 1 of the present disclosure is not limited to a specific shape of the battery cell, and may be, for example, a cylindrical battery cell.

If the battery cell 1 according to an embodiment of the present disclosure is provided as a cylindrical battery cell, referring to FIG. 2, the electrode assembly 10 may include a winding hole H1 formed in the core of the electrode assembly 10. In addition, the electrode assembly 10 may include a first uncoated portion 11 and a second uncoated portion 12.

More specifically, the electrode assembly 10 may have a structure in which a first electrode, a second electrode, and a separator interposed therebetween are wound around a winding axis, thereby defining a core and an outer surface. That is, the electrode assembly 10 applied to the present disclosure may be a jellyroll-type electrode assembly 10. In this case, an additional separator may be provided on the outer surface of the electrode assembly 10 for insulation from the battery housing 20. The electrode assembly 10 may have a winding structure well known in the art.

The first electrode may include a first electrode current collector and a first electrode active material applied on one or both sides of the first electrode current collector. An uncoated portion, on which the first electrode active material is not applied, may be provided at one end of the first electrode in the width direction (the direction parallel to the height direction of the battery cell 1 illustrated in FIG. 1). That is, the first electrode may include an uncoated portion that is not coated with an active material so as to be exposed to the outside of the separator at a long-side end in the winding direction. The uncoated portion that functions as a first electrode tab will be referred to as a "first uncoated portion 11" below.

The first uncoated portion 11 may be provided at the top of the electrode assembly 10 accommodated in the battery housing 20 in the height direction (the direction parallel to the height direction of the battery cell 1 illustrated in FIG. 1). That is, the first electrode may include a first uncoated portion 11 that is not coated with an active material layer so as to be exposed to the outside of the separator at a long-side end, and at least a portion of the first uncoated portion 11 may be used as an electrode tab by itself. The first uncoated portion 11 may be, for example, a negative electrode tab.

The second electrode may include a second electrode current collector and a second electrode active material applied on one or both sides of the second electrode current collector. An uncoated portion, on which the second electrode active material is not applied, may be provided at the other end of the second electrode in the width direction (the direction parallel to the height direction of the battery cell 1 illustrated in FIG. 1). That is, the second electrode may include an uncoated portion that is not coated with an active material so as to be exposed to the outside of the separator at a long-side end along the winding direction. The uncoated portion that functions as a second electrode tab will be referred to as a "second uncoated portion 12" below.

The second uncoated portion 12 may be provided at the bottom of the electrode assembly 10 accommodated in the battery housing 20 in the height direction. That is, the second electrode may include a second uncoated portion 12 that is not coated with an active material layer so as to be exposed to the outside of the separator at a long-side end, and at least a portion of the second uncoated portion 12 may be used as an electrode tab by itself. The second uncoated portion 12 may be, for example, a positive electrode tab.

Meanwhile, any active material known in the art may be used as the positive electrode active material coated on the positive electrode current collector and the negative electrode active material coated on the negative electrode current collector in the present disclosure without limitation.

At least a part of the first uncoated portion 11 may include a plurality of segments 11a divided along the winding direction of the electrode assembly 10. In this case, the plurality of segments 11a may be bent in the radial direction of the electrode assembly 10.

Referring to FIG. 2, the uncoated portions 11 and 12 may be bent in the radial direction of the electrode assembly 10, for example, from the outer circumference toward the core. In this case, the plurality of segments 11a of the bent first uncoated portion 11 may overlap in multiple layers to form a bent surface. In this case, a current collector 30 to be described later may be seated on the bent surface of the first uncoated portion 11 and then welded in a certain area. This structure of the first electrode may be applied to the second electrode in the same manner.

Meanwhile, referring to FIGS. 1 to 4, the battery housing 20 may have an opening formed on one side in the height direction (the direction parallel to the Z-axis). The battery housing 20 may receive the electrode assembly 10 through the opening. That is, the battery housing 20 may have an upper opening and a lower closed portion in the height direction. The battery housing 20 may be a substantially cylindrical container and may include a conductive metal.

Referring to FIGS. 1 and 2, the first current collector 30 included in the battery cell 1 according to an embodiment of the present disclosure may be configured to be electrically connected to the electrode assembly 10 and the battery housing 20. That is, the first current collector 30 may electrically connect the electrode assembly 10, for example, the first uncoated portion 11, and the battery housing 20. The first current collector 30 may be accommodated inside the battery housing 20 and may be provided in the opening. In this case, the first current collector 30 may be coupled to the inner surface of the battery housing 20.

As in the embodiment illustrated in FIG. 4, the first current collector 30 may be configured such that at least a part thereof is separated from the battery housing 20 if the internal pressure increases to a reference value or more due to a thermal event. Only a part of the first current collector 30 may be separated from the battery housing 20, or the entirety of the first current collector 30 may be separated from the battery housing 20. According to the above-implemented configuration of the present disclosure, before high pressure generated due to a thermal event occurring inside the battery housing 20 breaks the side surface of the battery housing 20, at least a part of the first current collector 30 may be separated from the battery housing 20 by the pressure of gas or the like, forming an opening. That is, when a thermal event occurs, at least a part of the first current collector 30 may be separated from the battery housing 20, thereby providing a space through which the gas, flame, and/or electrode assembly 10 may move.

When at least a part of the first current collector 30 is separated from the battery housing 20, the first current collector 30 may have a shape that is flipped upside down, compared to that in a normal state, as illustrated in FIG. 4. That is, in the normal state, a portion (housing coupling portion 32 to be described below) of the first current collector 30, which is coupled to the battery housing 20, may be positioned higher than a portion (first uncoated-portion coupling portion 31 to be described below) of the first current collector 30, which is coupled to the first uncoated portion 11. On the other hand, when a thermal event occurs, a portion (first uncoated-portion coupling portion 31 to be described below) of the first current collector 30, which is coupled to the first uncoated portion 11, may rise upward such that the portion of the first current collector 30, which is coupled to the first uncoated portion 11, is positioned higher than a portion (housing coupling portion 32 to be described below) of the first current collector 30, which is coupled to the battery housing 20.

For example, in order for at least a part of the first current collector 30 to be easily separated from the battery housing 20, the first current collector 30 may be welded to the battery housing 20 with a weak welding strength. Alternatively, the first current collector 30 may be partially welded to the battery housing 20.

When a thermal event such as thermal runaway occurs inside the battery housing 20, a side rupture phenomenon may occur so that the side of the battery housing 20 is destroyed due to high temperature and pressure such as gas or flame. According to the above-implemented configuration of the present disclosure, when a thermal event occurs in the battery cell 1, the first current collector 30 may be quickly separated from the battery housing 20, so that the electrode assembly 10 may be quickly ejected from the battery housing. Accordingly, the high temperature and pressure applied to the inner surface of the battery housing 20 may be minimized, thereby suppressing the occurrence of the side rupture phenomenon and ensuring the safety and reliability of the battery cell 1.

In addition, according to the above-implemented configuration of the present disclosure, gas or flame is quickly discharged outside the battery housing 20 while being guided in a direction to the opening rather than the side of the battery housing 20, so that thermal damage to other battery cells may be minimized.

More specifically, at least a portion of the first current collector 30 may be coupled to the inner surface of the battery housing 20. For example, at least a portion of the first current collector 30 and the inner surface of the battery housing 20 may be welded together. Therefore, as illustrated in FIG. 3, a welding portion W may be formed between at least a portion of the first current collector 30 and the inner surface of the battery housing 20. For example, laser welding, ultrasonic welding, or spot welding may be applied to weld the battery housing 20 and the first current collector 30. After inserting the electrode assembly 10 into the battery housing 20 through the opening, the battery housing 20 and at least a portion of the first current collector 30 may be pre-welded.

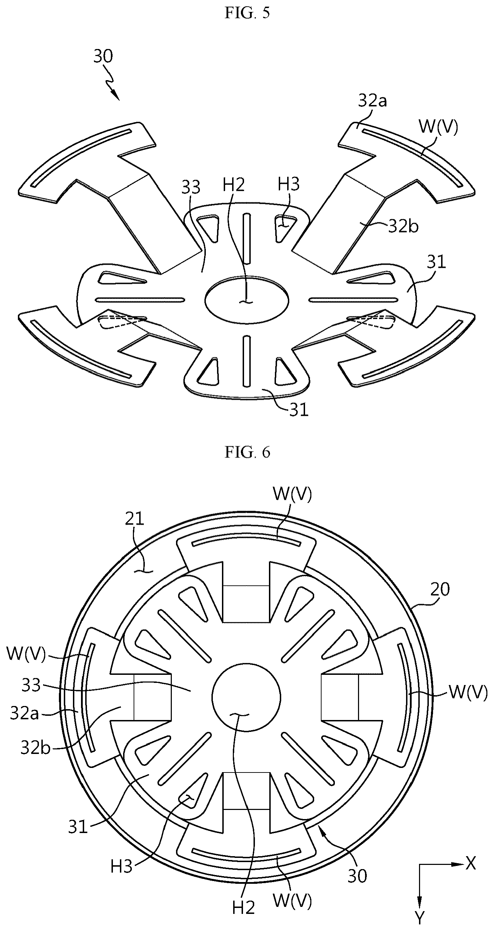

FIG. 5 is a perspective view of a first current collector included in a battery cell according to an embodiment of the present disclosure.

Referring to FIG. 5 in addition to FIG. 3, the first current collector 30 according to an embodiment of the present disclosure will be described in detail. The first current collector 30 may include a first uncoated-portion coupling portion 31 and a housing coupling portion 32.

The first uncoated-portion coupling portion 31 may be disposed at the top of the electrode assembly 10 and coupled to the first uncoated portion 11. One or more first uncoated-portion coupling portions 31 may be provided. The first uncoated-portion coupling portion 31 may be coupled to the first uncoated portion 11 by welding, for example, in the radial direction of the electrode assembly 10.

The housing coupling portion 32 may be disposed on the inner surface of the battery housing 20. One or more housing coupling portions 32 may be provided. For example, as illustrated in FIG. 5, the first current collector 30 may include a plurality of housing coupling portions 32.

One or more first uncoated-portion coupling portions 31 and the plurality of housing coupling portions 32 may be arranged, for example, roughly in a radial shape, a cross shape, or a combination thereof around the center of the first current collector 30. In another aspect, each of the plurality of housing coupling portions 32 may be disposed between adjacent first uncoated-portion coupling portions 31.

In this case, at least one of the plurality of housing coupling portions 32 may be welded to the inner surface of the battery housing 20. That is, at least one welding portion W may be provided between at least one of the plurality of housing coupling portions 32 and the inner surface of the battery housing 20.

Meanwhile, the first current collector 30 may further include a support portion 33. The support portion 33 may be disposed at the top of the electrode assembly 10. The first uncoated-portion coupling portions 31 and the plurality of housing coupling portions 32 may be configured to extend from the support portion 33.

The first uncoated-portion coupling portion 31 and the housing coupling portion 32 may be indirectly connected through the support portion 33, instead of being directly connected to each other. According to the above-implemented configuration of the present disclosure, when an external impact is applied to the cylindrical battery 1 of the present disclosure, the possibility of damage to the coupling portion between the first current collector 30 and the electrode assembly 10 and the coupling portion between the first current collector 30 and the battery housing 20 may be minimized.

The first uncoated-portion coupling portions 31 may be configured to extend approximately radially from the support portion 33 toward the side wall of the battery housing 20. The first uncoated-portion coupling portions 31 may be positioned apart from each other along the perimeter of the support portion 33.

The plurality of housing coupling portions 32 may be configured to extend approximately radially from the support portion 33 toward the side wall of the battery housing 20. The respective housing coupling portions 32 may be positioned apart from each other along the perimeter of the support portion 33.

In order to secure bonding strength by increasing the bonding area between the first current collector 30 and the electrode assembly 10 and reduce electrical resistance, the support portion 33, as well as the first uncoated-portion coupling portion 31, may be coupled to the first uncoated portion 11. The support portion 33 and the first uncoated portion 11 may be coupled by welding.

Each of the plurality of housing coupling portions 32 may include a contact portion 32a and a connection portion 32b. The contact portion 32a may be welded onto the inner surface of the battery housing 20. A plurality of contact portions 32a may be provided, and at least one of the plurality of contact portions 32a may be welded onto the inner surface of the battery housing 20. The plurality of contact portions 32a may be provided to be spaced apart from each other along the circumferential direction of the electrode assembly 10.

The connection portion 32b may be configured to connect the support portion 33 and the contact portion 32a. The connection portion 32b may be disposed so that at least a portion thereof is in contact with the first uncoated portion 11.

Meanwhile, referring to FIG. 5, the support portion 33 may have a current collector hole H2 formed at a position corresponding to the winding hole H1 formed at approximately the center of the electrode assembly 10. The winding hole H1 and the current collector hole H2, which communicate with each other, may function as a passage for inserting a welding rod or radiating a laser beam to weld a terminal 50 and a second current collector 60, which will be described below, or to weld the terminal 50 and a lead tab (not shown).

In addition, the first current collector 30 of the present disclosure may have at least one injection hole H3. The injection hole H3 may be provided in the first uncoated-portion coupling portion 31. Thus, in manufacturing the battery cell 1 according to an embodiment of the present disclosure, an assembly including the electrode assembly 10 and the first current collector 30 may be received inside the battery housing 20, and then an electrolyte may be injected. In this case, the injection performance may be improved through the injection hole H3.

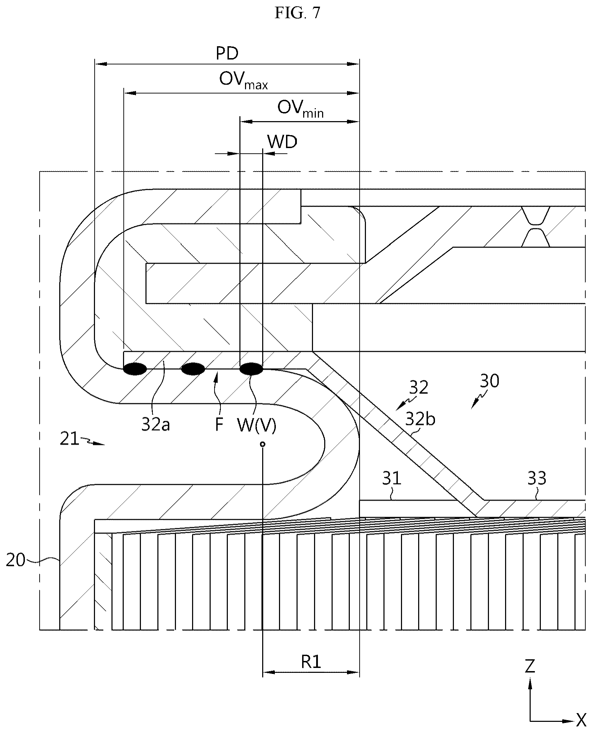

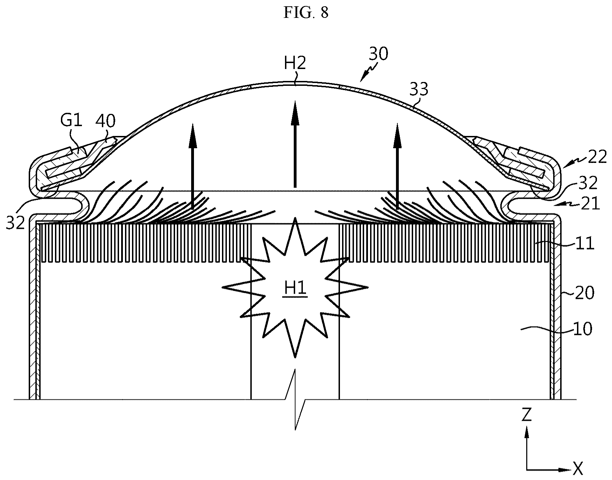

FIG. 6 is a plan view of a battery cell according to an embodiment of the present disclosure, and FIG. 7 is an enlarged view of part A in FIG. 3, which illustrates a welding portion included in a battery cell according to an embodiment of the present disclosure. In addition, FIG. 8 is a cross-sectional view illustrating the state in which a first current collector included in a battery cell is separated from a battery housing when a thermal event occurs according to an embodiment of the present disclosure.

According to an embodiment of the present disclosure, as illustrated in FIG. 6, the welding portion W may be provided in each of the plurality of housing coupling portions 32. That is, all of the contact portions 32a of the plurality of housing coupling portions 32 may be welded onto the inner surface of the battery housing 20.

According to the above-implemented configuration of the present disclosure, the coupling between the first current collector 30 and the battery housing 20 may be stably maintained in a normal state. In addition, when a thermal event occurs, at least a part of the first current collector 30 may be easily separated from the battery housing 20, thereby ensuring the thermal stability of the battery cell 1.

In this case, the welding portion W may include a vulnerable portion V having a weak welding strength. Preferably, the welding strength of the vulnerable portion V may be approximately 10 kgf/cm² or less. In addition, preferably, the welding strength of the vulnerable portion V may be approximately more than 0 kgf/cm².

As shown in FIG. 6, the vulnerable portion V may be provided between all of the housing coupling portions 32 and the inner surface of the battery housing 20, respectively. In this case, as shown in FIG. 8, if the internal pressure of the battery housing 20 reaches a reference value or higher due to a thermal event occurring therein, the entire first current collector 30 may be separated from the battery housing 20.

According to the above-implemented configuration of the present disclosure, when a thermal event occurs, the entire first current collector 30 is completely separated from the battery housing 20 to form an opening, so that the electrode assembly 10 may be ejected more easily through the opening. Therefore, according to the above-implemented configuration of the present disclosure, when a thermal event occurs, the heat and pressure inside the battery housing 20 may be effectively discharged to the outside of the battery housing 20.

Unlike the above embodiment, the vulnerable portion V may be provided in only some of the plurality of welding portions W between all of the plurality of housing coupling portions 32 and the inner surface of the battery housing 20. That is, the bonding strength between the housing coupling portion 32 and the inner surface of the battery housing 20 may vary among the couplings thereof. In this case, when a thermal event occurs, only a part of the first current collector 30 may be separated from the battery housing 20, forming an opening.

Referring to FIGS. 6 and 7, a plurality of welding portions W may be provided between the inner surface of the battery housing 20 and one of the plurality of housing coupling portions 32. In this case, the plurality of welding portions W may be configured in a certain welding pattern. The number of welding portions W formed in one housing coupling portion 32 may vary among the plurality of housing coupling portions 32. That is, the bonding strength between the housing coupling portion 32 and the inner surface of the battery housing 20 may vary among the couplings thereof. In other words, the bonding strength between some of the plurality of housing coupling portions 32 and the inner surface of the battery housing 20 may be configured to be weaker than the bonding strength between the remaining housing coupling portions 32 and the inner surface of the battery housing 20.

For example, four housing coupling portions 32 may be provided such that three welding portions W are provided between two of the four housing coupling portions 32 and the inner surface of the battery housing 20, respectively, and such that two welding portions W are provided between the remaining two housing coupling portions 32 and the inner surface of the battery housing 20, respectively. Therefore, the bonding strength between the remaining two housing coupling portions 32 and the inner surface of the battery housing 20 may be configured to be lower. In this case, when a thermal event occurs, only a part of the first current collector 30 may be separated from the battery housing 20, so that the opening is open.

Meanwhile, referring to FIG. 7, the battery housing 20 may include a beading portion 21. The beading portion 21 may be formed on the top of the electrode assembly 10. The beading portion 21 may be formed inward to be recessed by pressing at an end of the battery housing 20 adjacent to the opening. More specifically, the beading portion 21 may be provided between the opening formed on one side of the battery housing 20 and a receiving portion that receives the electrode assembly 10. The beading portion 21 may be configured such that the outer circumference of the battery housing 20 is pressed inward to a predetermined depth. The vertical distance from the inner surface of the battery housing 20 to the innermost point of the beading portion 21 may be defined as a pressing depth PD. As a result, the inner diameter of the battery housing 20 in the area where the beading portion 21 is formed may be smaller than the diameter of the electrode assembly 10.

The beading portion 21 may prevent the electrode assembly 10, which may have a size approximately corresponding to the inner diameter of the battery housing 20, from popping out through the opening formed at the top of the battery housing 20, and may function as a support on which the first current collector 30 is seated. The beading portion 21 may function as a support for fixing a housing cover 40 or a sealing gasket G1, which will be described later, as well as the first current collector 30.

In the case where the beading portion 21 is formed in the battery housing 20, the housing coupling portion 32 may be coupled to the beading portion 21. In this case, the contact portion 32a may be welded to the beading portion 21. That is, the welding portion W may be provided between the beading portion 21 and at least one of the plurality of housing coupling portions. Both the beading portion 21 and the contact portion 32a may be configured to extend in a direction approximately parallel to the lower surface of the battery housing 20, i.e., a direction approximately perpendicular to the side wall of the battery housing 20.

According to the above-implemented configuration of the present disclosure, when coupling the housing coupling portion 32 to the beading portion 21, the bonding strength between the housing coupling portion 32 and the beading portion 21 may be increased, and the resistance reduction effect may be increased according to the increase in the contact area.

The beading portion 21 may have a flat section F in at least a part, which is parallel to the lower surface of the battery housing 20. The flat section F may be formed on the upper surface of the beading portion 21. The housing coupling portion 32, i.e., the contact portion 32a, may be welded onto the flat section F.

The length of the flat section F of the beading portion 21 in contact with the first current collector 30 may be obtained from "OV - R1". Referring to FIG. 7, the shortest distance from the end of the contact portion 32a to the vertical line passing through the innermost point of the beading portion 21 may be defined as an overlap length OV. The length of the flat section F may correspond to the length obtained by subtracting the radius of curvature R1 of the beading portion 21 from the overlap length OV. The welding area between the contact portion 32a and the beading portion 21 may be formed to be less than the length of the flat section F.

The radial width WD of the welding portion W may be configured to be 20% or less of the length of the flat section F. If the above ratio satisfies the above range, the welding strength between the first current collector 30 and the beading portion 21 of the battery housing 20 may be lowered. Accordingly, when a thermal event occurs in the battery cell 1, the first current collector 30 may be quickly separated from the battery housing 20, so that the electrode assembly 10 may be smoothly ejected from the battery housing 20. Therefore, the heat and pressure inside the battery housing 20 may be minimized, so that the thermal stability of the battery cell 1 may be secured.

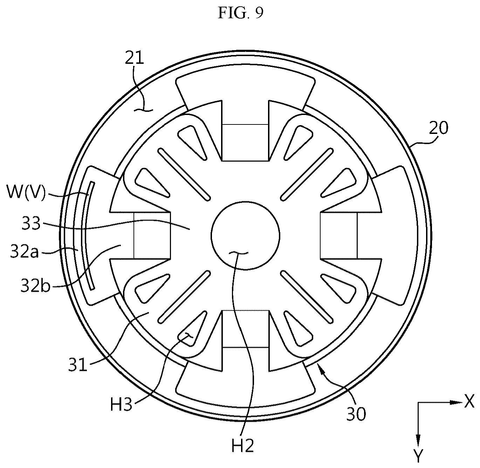

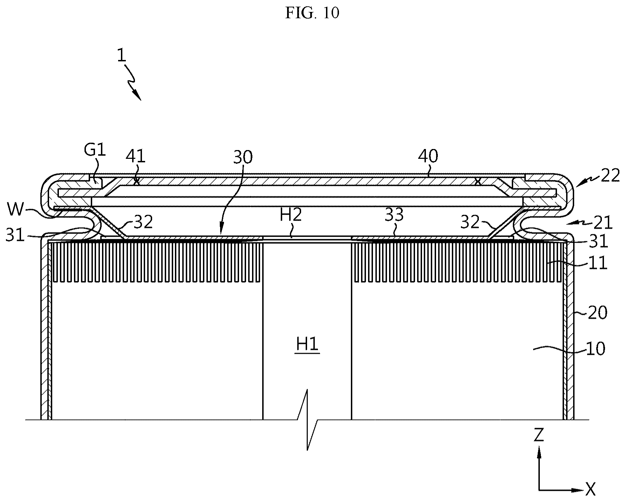

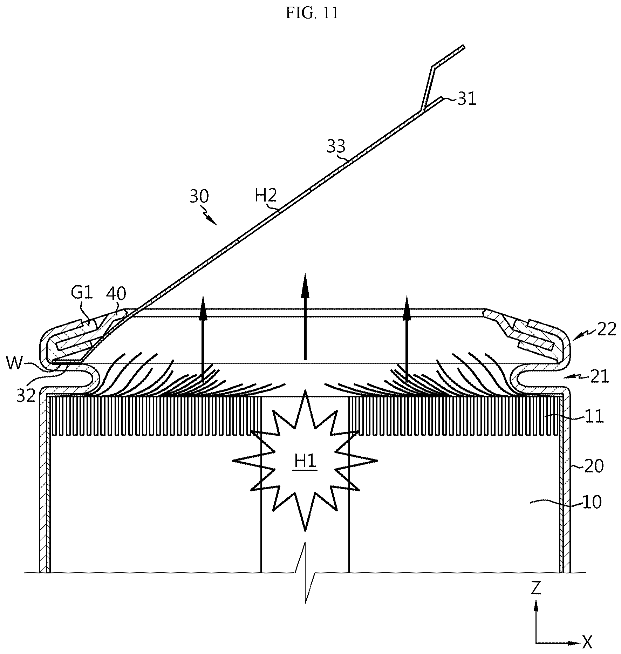

FIG. 9 is a plan view of a battery cell according to another embodiment of the present disclosure, and FIG. 10 is a cross-sectional view illustrating the state in which a part of a first current collector included in a battery cell is coupled to the battery housing according to an embodiment of the present disclosure. In addition, FIG. 11 is a cross-sectional view illustrating the state in which a part of a first current collector included in a battery cell is separated from a battery housing when a thermal event occurs according to an embodiment of the present disclosure.

The welding portion W may be provided only in some of the plurality of housing coupling portions 32. For example, as shown in FIG. 9 and FIG. 10, four housing coupling portions 32 may be provided, and the welding portion W may be provided only between one of the four housing coupling portions 32 and the inner surface of the battery housing 20. The total number of housing coupling portions 32 and the number of welding portions W may be configured differently from the above embodiment.

In this case, as shown in FIG. 11, when a thermal event occurs, only a part of the first current collector 30, that is, the housing coupling portions 32 without the welding portion W, may be separated from the battery housing 20, so that the opening is open. As a result, according to the above-implemented configuration of the present disclosure, when a thermal event occurs in the battery cell 1, a part of the first current collector 30 may be quickly separated from the battery housing 20, so that the electrode assembly 10 may be smoothly ejected from the battery housing 20. Therefore, the heat and pressure inside the battery housing 20 may be minimized, so that the thermal stability of the battery cell 1 may be secured.

Referring to FIG. 1, FIG. 3, and FIG. 4, the battery cell 1 according to an embodiment of the present disclosure may further include a housing cover 40. The housing cover 40 may be configured to seal the opening formed on one side of the battery housing 20. The housing cover 40 may be fixed by a crimping portion 22 formed at the top of the battery housing 20. In this case, a sealing gasket G1 may be interposed between the battery housing 20 and the housing cover 40 and between the current collector 30 and the housing cover 40 in order to improve the fixing force and the sealing of the battery housing 20.

The beading portion 21 may provide a support surface on which the housing cover 40 may be seated. The upper surface of the beading portion 21 may be configured to extend in a direction approximately parallel to the lower surface of the battery housing 20, that is, in a direction approximately perpendicular to the side wall of the battery housing 20, in order to stably support the edge of the housing cover 40.

Meanwhile, the battery housing 20 may further include a crimping portion 22. The crimping portion 22 may be formed above the beading portion 21. The crimping portion 22 may be configured to extend and band so as to surround the edge of the housing cover 40 disposed on the beading portion 21. The housing cover 40 may be fixed to the beading portion 21 by the crimping portion 22 configured above. The crimping portion 22 may be excluded, and the housing cover 40 may be fixed while covering the opening of the battery housing 20 through another fixing structure.

The housing cover 40 may have a venting portion 41 formed to prevent an increase in internal pressure due to gas generated inside the battery housing 20. The venting portion 41 may be configured to be broken when the internal pressure of the battery housing 20 increases to a reference value or more. For example, the venting portion 41 may be an area formed in a portion of the housing cover 40 to be structurally vulnerable, compared to the surrounding area, so as to be easily broken when internal pressure is applied. The venting portion 41 may be, for example, an area that is thinner than the surrounding area. Referring to FIG. 1 and FIG. 3, the venting portion 41 may form a closed loop in an approximately circular shape.

According to the above-implemented configuration of the present disclosure, as shown in FIG. 4, FIG. 8, and FIG. 12, if the internal pressure of the battery housing 20 increases to a reference value or more due to a thermal event occurring therein, the venting portion 41 may be ruptured, so that at least a part of the first current collector 30 may be separated from the battery housing 20. In this case, only the connection portion 32b, first uncoated-portion coupling portion 31, and support portion 33 may be forced out toward the venting portion 41. As a result, the first current collector 30 may have a shape that is flipped upside down, compared to that in the normal state. According to the above-implemented configuration of the present disclosure, the first current collector 30 may be separated from the electrode assembly 10 to have a flipped shape, thereby discharging high temperature heat and pressure through the venting portion 41.

Meanwhile, referring to FIG. 3, the terminal 50 may penetrate the opposite side of the opening of the battery housing 20 so as to be electrically connected to the second uncoated portion 12 of the electrode assembly 10. The terminal 50 may penetrate approximately the center of the lower surface of the battery housing 20.

Meanwhile, in the present disclosure, the outer surface 20a of the closed portion located on the opposite side of the opening provided at the top of the battery housing 20 may function as a first electrode terminal T1. If the first uncoated portion 11 is a negative electrode tab, the first electrode terminal T1 may be a negative electrode terminal.

The battery cell 1 according to the present disclosure has a structure in which the terminal 50 exposed through the lower surface opposite the opening of the battery housing 20 may be used as a second electrode terminal T2, and in which the remaining area of the lower surface of the battery housing 20, excluding the area occupied by the terminal 50 (including the area where the insulating gasket G2 is exposed in the case where the insulating gasket G2 is exposed to the outside of the terminal 50 through the outer surface 20a of the closed portion), may be used as the first electrode terminal T1.

Therefore, the battery cell 1 according to the present disclosure may simplify the electrical connection structure by connecting both the positive electrode and the negative electrode from one direction when electrically connecting multiple battery cells 1. In addition, the battery cell 1 according to the present disclosure has a structure in which most of the lower surface opposite the opening of the battery housing 20 may be used as the electrode terminal, thereby securing a sufficient area for welding components for electrical connection.

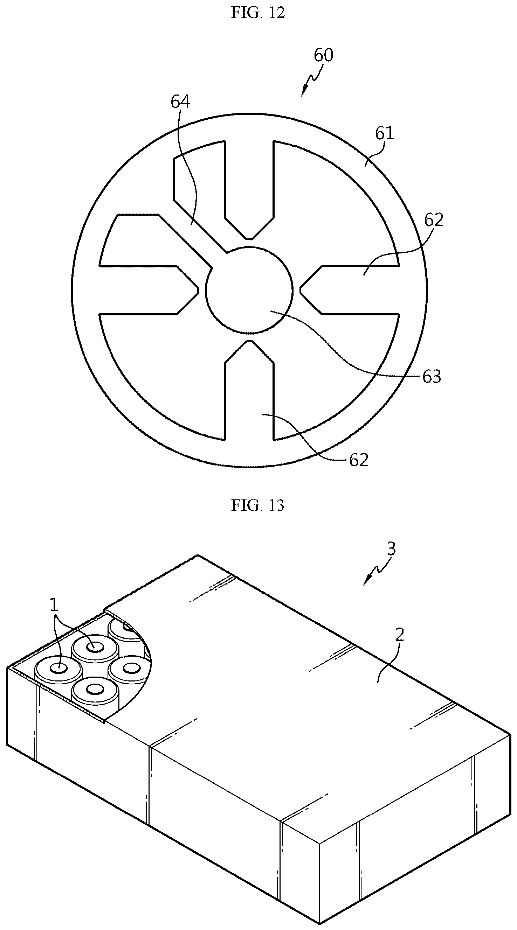

FIG. 12 is a drawing illustrating a second current collector included in a cylindrical battery cell according to an embodiment of the present disclosure.

Referring to FIG. 12 in addition to FIG. 1, a second current collector 60 may be coupled to the bottom of the electrode assembly 10. The second current collector 60 may include a conductive metal material and may be electrically coupled to the second uncoated portion 12. The second current collector 60 may be coupled to a coupling surface (bending surface) formed by bending the end of the second uncoated portion 12 in a direction parallel to the current collector 60. This is the same as the first uncoated portion 11 described above.

The second current collector 60 may include a border portion 61 and a second uncoated-portion coupling portion 62. The border portion 61 may be disposed under the electrode assembly 10 and may be configured substantially in the shape of a rim with an empty space S formed therein. Although FIG. 12 in the present disclosure shows only the border portion 61 in the shape of a circular rim, the present disclosure is not limited thereto. Alternatively, the border portion 61 may be configured as a roughly square shape, a hexagonal shape, an octagonal shape, or other shapes.

The second uncoated-portion coupling portion 62 may extend inward from the border portion 61 so as to be coupled to the second uncoated portion 12.

Meanwhile, for example, the terminal 50 may be coupled to the second current collector 60 connected to the second uncoated portion 12 or may be coupled to a lead tab (not shown) connected to the second uncoated portion 12 so as to be electrically connected to the electrode assembly 10.

In this case, the current collector (second current collector) 60 may include a terminal coupling portion 63. The terminal coupling portion 63 may be spaced apart from the second uncoated-portion coupling portion 62. The terminal coupling portion 63 may be positioned inside the border portion 61. The terminal coupling portion 63 may be coupled to the terminal 50 by welding. The terminal coupling portion 63 may have a diameter substantially equal to or larger than the diameter of a flat portion formed on the bottom surface of the terminal 50 in order to secure a welding area for coupling with the flat portion formed on the bottom surface of the terminal 50. The terminal coupling portion 63 may be positioned, for example, at approximately the center of the inner space surrounded by the border portion 61. The terminal coupling portion 63 may be disposed at a position corresponding to the winding hole H1 formed in the core of the electrode assembly 10.

The second uncoated-portion coupling portion 62 and the terminal coupling portion 63 are disposed to be spaced apart from each other, instead of being directly connected to each other, and are electrically connected by the border portion 61. As described above, the current collector 60 of the present disclosure has a structure in which the uncoated-portion coupling portion 62 and the terminal coupling portion 63 are indirectly connected through the border portion 6, instead of being directly connected to each other, so when impact and/or vibration are applied to the battery cell 1, the impact applied to the coupling portion between the uncoated-portion coupling portion 62 and the second uncoated portion 12 and the coupling portion between the terminal coupling portion 63 and the terminal 50 may be dispersed. Therefore, the current collector 60 of the present disclosure may minimize or prevent damage to the welding portion due to external impact.

The current collector 60 may further include a bridge portion 64 that extends inward from the border portion 61 to be connected to the terminal coupling portion 63.

A plurality of second uncoated-portion coupling portions 62 and/or a plurality of bridge portions 64 may be provided. The number of second uncoated-portion coupling portions 62 and/or bridge portions 64 may be determined in consideration of the resistance level required for the battery cell 1, the opening ratio required for the current collector 60, or the like.

Meanwhile, the second uncoated portion 12 and/or the second current collector 60 may remain in an insulation state from the battery housing 20. To this end, an insulator 70 may be interposed between the second uncoated portion 12 and the battery housing 20 and/or between the second current collector 60 and the battery housing 20. In the case where the insulator 70 is applied, the terminal 50 may penetrate the insulator 70 for electrical connection with the second uncoated portion 12.

FIG. 13 is a drawing illustrating a schematic configuration of a battery pack including cylindrical battery cells according to an embodiment of the present disclosure.

Referring to FIG. 13, a battery pack 3 according to an embodiment of the present disclosure may include a battery cell assembly in which a plurality of battery cells 1 according to an embodiment of the present disclosure described above are electrically connected, and a pack housing 2 accommodating the same.

The plurality of battery cells 1 may be accommodated inside the pack housing 2 with the venting portion 41 facing downward. According to the above-implemented configuration of the present disclosure, if the battery pack 3 is mounted to a vehicle or the like, the electrode assembly 10 may be prevented from moving toward the driver located above when a thermal event occurs in the battery cell 1.

Meanwhile, the battery pack 3 according to an embodiment of the present disclosure may further include components such as a bus-bar for electrical connection, a cooling unit, and a power terminal, which have been omitted from the drawing for convenience.

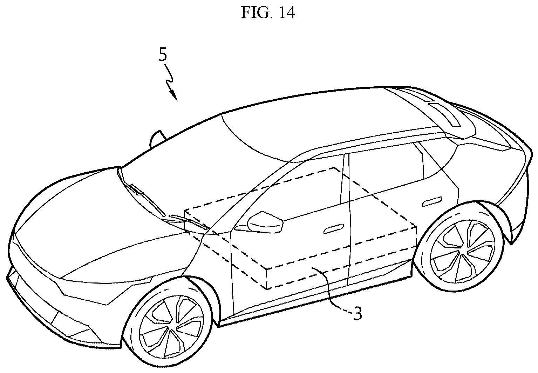

FIG. 14 is a drawing illustrating a schematic configuration of a vehicle including a battery pack according to an embodiment of the present disclosure.

Referring to FIG. 14, a vehicle 5 according to an embodiment of the present disclosure may be, for example, an electric vehicle, a hybrid vehicle, or a plug-in hybrid vehicle, and includes a battery pack 3 according to an embodiment of the present disclosure. The vehicle 5 may include a four-wheel vehicle and a two-wheel vehicle. The vehicle 5 may operate by receiving power from the battery pack 3 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery cell comprising:
an electrode assembly comprising a first electrode having a first uncoated portion, a second electrode having a second uncoated portion, and a separator interposed therebetween;
a battery housing configured to receive the electrode assembly through an opening provided on one side; and
a first current collector provided in the opening and configured to electrically connect the first uncoated portion and the battery housing,
wherein the first current collector is configured such that at least a part thereof is separated from the battery housing when internal pressure increases to a reference value or more.

2. The battery cell according to claim 1,
wherein a welding portion is formed between the first current collector and an inner surface of the battery housing, so that at least a portion of the first current collector is welded to the inner surface of the battery housing.

3. The battery cell according to claim 2,
wherein the first current collector comprises
a first uncoated-portion coupling portion disposed at a top of the electrode assembly and coupled to the first uncoated portion, and
a plurality of housing coupling portions disposed on the inner surface of the battery housing, and
wherein at least one welding portion is provided between at least one of the plurality of housing coupling portions and the inner surface of the battery housing.

4. The battery cell according to claim 3,
wherein the first current collector further comprises a support disposed at a top of the electrode assembly, and
wherein the first uncoated-portion coupling portion and the plurality of housing coupling portions are configured to extend from the support.

5. The battery cell according to claim 4,
wherein each of the plurality of housing coupling portions comprises
a contact portion welded onto the inner surface of the battery housing, and
a connection portion configured to connect the support and the contact portion.

6. The battery cell according to claim 5,
wherein the contact portions are provided to be spaced apart from each other along a circumferential direction of the electrode assembly.

7. The battery cell according to claim 3,
wherein the welding portion is provided in each of the plurality of housing coupling portions.

8. The battery cell according to claim 7,
wherein the welding portion comprises a vulnerable portion having weak welding strength.

9. The battery cell according to claim 8,
wherein welding strength of the vulnerable portion is approximately 10 kgf/cm² or less.

10. The battery cell according to claim 7,
wherein a plurality of welding portions are formed between the inner surface of the battery housing and one of the plurality of housing coupling portions.

11. The battery cell according to claim 10,
wherein the number of welding portions formed for each housing coupling portion varies among the plurality of housing coupling portions.

12. The battery cell according to claim 7,
wherein the battery housing comprises a beading portion formed at an end adjacent to the opening so as to be recessed inward by pressing, and
wherein the welding portion is provided between the beading portion and the plurality of housing coupling portions.

13. The battery cell according to claim 12,
wherein the beading portion has a flat section parallel to a lower surface of the battery housing in at least a portion thereof, and
wherein a radial width of the welding portion is configured to be 20% or less of a length of the flat section.

14. The battery cell according to claim 3,
wherein the welding portion is provided only in some of the plurality of housing coupling portions.

15. The battery cell according to claim 1,
further comprising a housing cover configured to seal the opening and having a venting portion.

16. The battery cell according to claim 1,
further comprising a terminal configured to penetrate the battery housing on an opposite side of the opening so as to be electrically connected to the second uncoated portion.

17. The battery cell according to claim 16,
further comprising a second current collector positioned between the electrode assembly and the terminal,
wherein the second current collector comprises
a second uncoated-portion coupling portion coupled to the second uncoated portion, and
a terminal coupling portion coupled to the terminal.

18. A battery pack comprising a plurality of battery cells according to any one of claims 1 to 17.

19. A vehicle comprising a battery pack according to claim 18.
